# EUROPÄISCHE PATENTSCHRIFT

(11) **EP 2 336 712 B1**
(45) Veröffentlichungstag und Bekanntmachung des Hinweises auf die Patenterteilung: **21.11.2018**
(21) Anmeldenummer: 10193273.9
(22) Anmeldetag: 01.12.2010
(51) Int. Cl.: G01B 5/08

(54) **Vorrichtung und Verfahren zur Messung von Raddurchmessern**
Method and device for measuring wheel diameters
Dispositif et procédé destinés à la mesure de diamètres de roues

(30) Priorität: 04.12.2009 AT 19282009
(43) Veröffentlichungstag der Anmeldung: 22.06.2011
(73) Patentinhaber: NextSense Mess- und Prüfsysteme GmbH, 8020 Graz (AT)
(72) Erfinder: Gasser, Clemens, 8045 Graz-Andritz (AT); Kaufmann, Friedrich Peter, 8051 Graz-Gösting (AT); Deutschl, Edwin, 8010 Graz (AT); Niel, Albert, 8047 Graz-Ragnitz (AT)
(74) Vertreter: Wirnsberger, Gernot

(56) Entgegenhaltungen:
- WO-A1-2009/028776
- FR-A1- 2 617 278
- GB-A- 2 433 120
- US-A- 4 268 968
- US-A1- 2007 068 016
- US-A1- 2008 074 679

## Beschreibung

Die Erfindung betrifft eine Vorrichtung für eine Ermittlung eines Durchmessers eines kreisförmigen Gegenstandes, insbesondere eines Eisenbahn-, U-Bahn- oder Straßenbahnrades im eingebauten Zustand.

Des Weiteren betrifft die Erfindung eine Einrichtung mit einer derartigen Vorrichtung.

Schließlich betrifft die Erfindung ein Verfahren zur Ermittlung eines Durchmessers eines kreisförmigen Gegenstandes, insbesondere eines Eisenbahn-, U-Bahn- oder Straßenbahnrades im eingebauten Zustand, wobei zumindest zwei Punkte oder Bereiche einer Vorrichtung, die einen bekannten Abstand voneinander aufweisen, an einer Umfangsfläche des Gegenstandes angelegt werden, wonach Koordinaten zumindest eines weiteren Punktes der Umfangsfläche des Gegenstandes optisch ermittelt werden, um anhand von Koordinaten von zumindest drei Punkten den Durchmesser des Gegenstandes zu berechnen.

Einer regelmäßigen Ermittlung eines Durchmessers von kreisförmigen Gegenständen, die bei Benutzung bzw. im Einsatz einem Verschleiß unterliegen, kann bei verschiedenen Anwendungen eine große Bedeutung zukommen. Beispielsweise sind metallische Räder von Eisenbahnen, U-Bahnen oder Straßenbahnen regelmäßig im Service, während einer Überprüfung oder auch während einer Reparatur in Bezug auf deren Durchmesser zu vermessen. Da z. B. Eisenbahnräder im Einsatz einer Abnutzung bzw. einem Verschleiß unterliegen, ist eine derartige Abnutzungsprüfung unerlässlich. Sollten auf einer gegebenenfalls gedanklichen Achse gegenüberliegende Eisenbahnräder unterschiedlich abgenutzt sein, kann der unterschiedliche Verschleiß und damit die unterschiedlichen Durchmesser der Eisenbahnräder im schlechtesten Fall zu einer Entgleisung eines Zuges und somit zu einer erheblichen Gefährdung von Personen und/oder Gütern führen.

Aus dem Stand der Technik sind verschiedene Methoden bekannt geworden, Durchmesser von kreisförmigen Gegenständen, insbesondere Eisenbahn-, U-Bahn- und/oder Straßenbahnrädern zu vermessen.

Bekannt ist es, Schiebelehren zum Vermessen eines Durchmessers eines Eisenbahnrades einzusetzen. Eine derartige Vorrichtung ist beispielsweise unter der Internetseite www.graw.com ersichtlich. Ein solches Messinstrument erfordert jedoch einen Ausbau eines Eisenbahnrades oder eines Rades eines anderen Verkehrsmittels.

Bekannt ist es des Weiteren, sogenannte 3-Punkt-Messgeräte zur Ermittlung eines Durchmessers eines Eisenbahnrades oder eines anderen kreisförmigen Gegenstandes einzusetzen. Bei derartigen Messgeräten wird eine Vorrichtung an einer Umfangsfläche eines kreisförmigen Gegenstandes wie eines Eisenbahnrades zur Anlage gebracht, wobei zwei Anlage- bzw. Auflagepunkte als Fixpunkte dienen. Mit einem zwischen den Fixpunkten liegenden mechanischen Taster wird ein dritter Messpunkt bzw. werden dessen Koordinaten ermittelt, sodass durch Interpolation aus drei Messpunkten näherungsweise ein Kreis und damit dessen Durchmesser bzw. ein Durchmesser eines Eisenbahnrades oder eines anderen Rades ermittelt werden kann. Bei entsprechenden Messgeräten ist allerdings nachteilig, dass die Vorrichtungen nur in frei verfügbaren bzw. zugänglichen Bereichen eines Eisenbahnrades eingesetzt werden können. Dies bedeutet, dass zwar eine Messung im eingebauten Zustand eines Eisenbahnrades oder eines anderen Rades möglich ist, die Messung allerdings ungenau bleiben muss. Grund hierfür ist, dass aufgrund der kleinen zur Verfügung stehenden freien Flächen bzw. Messbereiche maximale Entfernungen von Messpunkten entsprechend limitiert sind, sodass letztlich die Berechnung eines Durchmessers eines Kreises nur näherungsweise erfolgen kann. Dies ist insofern beachtlich, als dass bereits geringe Durchmesserdifferenzen von Eisenbahnrädern von 1/10 mm zu den zuvor erläuterten Gefahren führen können. Grundsätzlich ist es zwar möglich, die Genauigkeit zu verbessern, indem die Vorrichtung mit größeren Maximalabständen endseitiger Anlagepunkte ausgebildet ist, allerdings ist in diesem Fall für eine Messung ein Ausbau eines Eisenbahnrades oder eines anderen Rades eines Verkehrsmittels erforderlich.

Aus der WO 2005/073666 A1 ist eine Vorrichtung zum optischen Vermessen eines Durchmessers eines Eisenbahnrades bekannt geworden. Die Vorrichtung weist mehrere Anlagepunkte auf, die endseitig der Vorrichtung angeordnet sind. Die Vorrichtung ist im Wesentlichen bogenförmig ausgebildet und weist im Zentrum, zwischen den endseitigen Anlagepunkten, einen Sensor auf, der von einer Lichtquelle der Vorrichtung emittiertes Licht misst, das von einer Umfangsfläche eines Eisenbahnrades reflektiert wird. Die Vorrichtung wird an einem freien Umfang eines Eisenbahnrades angesetzt, wonach die Messung erfolgt. Aufgrund der bekannten Positionen und Abstände der Anlagepunkte sowie einer Position des Sensors und der damit ermittelten Koordinaten eines weiteren Punktes der Umfangsfläche können drei Punkte fixiert werden, anhand derer ein Durchmesser eines Eisenbahnrades ermittelt werden kann. Bei einer entsprechenden Messung handelt es sich ebenfalls um eine 3-Punkt-Messung, allerdings wiederum mit dem Nachteil, dass die Vorrichtung lediglich in freien Bereichen eines Eisenbahnrades angesetzt werden kann und daher eine Messung zu ungenauen Messergebnissen führen kann.

In der US 2005/0259273 A1 ist eine weitere Vorrichtung zur optischen Ermittlung eines Durchmessers eines Eisenbahnrades offenbart, die allerdings relativ komplex aufgebaut ist.

In der US 2008/0074679 A1 ist eine Vorrichtung zur Bestimmung eines Profils eines Eisenbahnrades offenbart, die seitlich an einem Eisenbahnrad angebracht werden kann.

Diese Vorrichtung dient im Wesentlichen einer Messung des Profils eines Eisenbahnrades und weist diesbezüglich einen verstellbaren Bolzen auf, mit dessen Hilfe eine Spurkranzhöhe festgestellt werden kann.

In der JP 200837284 A, der EP 0 228 500 A2, der US 2004/0095585 A1, der DE 101 02 673 A1, der DE 10 2006 024 040 B3, der WO 2009/028776 A1, der GB 2 433 120 A, der US 4 268 968 A, der FR 2 617 278 A1 und der EP 1 348 931 A2 sind weitere Vorrichtungen offenbart, mit deren Hilfe Merkmale von Rädern, teilweise insbesondere Eisenbahnrädern, feststellbar bzw. ermittelbar sind.

Aufgabe der Erfindung ist es, eine Vorrichtung der eingangs genannten Art anzugeben, mit deren Hilfe auf einfache Weise eine hochgenaue Ermittlung eines Durchmessers eines kreisförmigen Gegenstandes, insbesondere eines Eisenbahn-, U-Bahn- oder Straßenbahnrades im eingebauten Zustand, möglich ist.

Ein weiteres Ziel der Erfindung ist es, eine Einrichtung der eingangs genannten Art anzugeben, mit welcher auf einfache Weise ein Durchmesser eines kreisförmigen Gegenstandes, insbesondere eines Eisenbahn-, U-Bahn- oder Straßenbahnrades im eingebauten Zustand, exakt bestimmbar ist.

Ein noch weiteres Ziel der Erfindung ist es, ein Verfahren der eingangs genannten Art anzugeben, mit dem in einfacher Weise exakt ein Durchmesser eines kreisförmigen Gegenstandes, insbesondere eines Eisenbahn-, U-Bahn- oder Straßenbahnrades im eingebauten Zustand, bestimmbar ist. Die Aufgabe der Erfindung wird mit der Merkmalskombination des Anspruchs 1 bzw. des Anspruchs 10 gelöst. Vorteilhafte Weiterbildungen der Erfindung sind Gegenstand der abhängigen Ansprüche.

Die Aufgabe der Erfindung wird erfindungsgemäß dadurch gelöst, dass bei einer Vorrichtung der eingangs genannten Art eine Anlagefläche zur seitlichen Anlage an den kreisförmigen Gegenstand vorgesehen ist, wobei an der Anlagefläche zumindest zwei abstehende Anlageelemente zur Anlage der Vorrichtung auch an einer Umfangsfläche des kreisförmigen Gegenstandes angeordnet sind und wobei zumindest ein weiteres als Referenz dienendes Element von der Anlagefläche oder einer damit verbundenen Fläche in starrer Verbindung absteht.

Ein mit der Erfindung erzielter Vorteil ist insbesondere darin zu sehen, dass mithilfe der erfindungsgemäßen Vorrichtung eine Ermittlung eines Durchmessers eines kreisförmigen Gegenstandes möglich ist, insbesondere eines Eisenbahn-, U-Bahn- oder Straßenbahnrades im eingebauten Zustand, wobei der Gegenstand auf einer Unterlage aufliegen kann, wie es beispielsweise bei Eisenbahnrädern bei einer routinemäßigen Prüfung der Fall ist, und dadurch eine hohe Genauigkeit in Bezug auf eine Durchmessermessung bzw. -berechnung erzielt werden kann. Durch die erfindungsgemäße Vorrichtung ist es möglich, unter anderem durch die seitliche Zuführung, dass zwei Fixpunkte, nämlich die Anlagepunkte bzw. -linien geschaffen sind, die unabhängig von einem Auflagepunkt eines kreisförmigen Gegenstandes wie eines Eisenbahnrades sind. Anders ausgedrückt kann gesagt werden, dass die Vorrichtung seitlich auch dann zuführbar ist, wenn beispielsweise der kreisförmige Gegenstand in Form eines eingebauten Eisenbahnrades auf einer Schiene liegt. Die Anlagepunkte können daher relativ weit voneinander beabstandet sein, was zu einer hohen Genauigkeit bei der Ermittlung eines Durchmessers führt. Zumindest ein weiterer Punkt wird mithilfe des zumindest einen weiteren als Referenz dienenden Elementes ermittelt, das ortsfest ist bzw. unbeweglich mit der Anlagefläche in Verbindung steht. Dabei dient dieses zumindest eine weitere Element insbesondere dann als Referenz, wenn mittels eines Lichtschnittverfahrens ein Teil der Umfangsfläche des kreisförmigen Gegenstandes sowie des als Referenz dienenden Elementes aufgenommen wird. Die von einem Detektor bzw. Sensor aufgenommenen Messdaten bzw. Sensordaten können anschließend in Weltkoordinaten transformiert werden, da die Geometrie des als Referenz dienenden Elementes bekannt ist. Durch die Transformation werden gleichzeitig die von der Umfangsfläche aufgenommenen Punkte relativ zu den zumindest zwei abstehenden Anlageelementen festgelegt, da das zumindest eine weitere als Referenz dienende Element geometrisch relativ zu den Anlageelementen fixiert ist.

Zweckmäßig ist es, dass die Anlageelemente senkrecht zur Anlagefläche abstehen, weil dann einfache geometrische Verhältnisse beim Anlegen der Vorrichtung gegeben sind, wenngleich auch andere Ausführungsvarianten möglich sind.

Grundsätzlich können beliebig viele Anlageelemente von der Anlagefläche abstehen. Von Vorteil ist es jedoch, dass nur zwei Anlageelemente vorgesehen sind, die vorzugsweise im Bereich von Enden der Anlagefläche angeordnet sind. Die zwei Anlageelemente bzw. deren Anlagepunkte bzw. -linien an der Umfangsfläche eines kreisförmigen Gegenstandes liegen immer auf einer Vielzahl von Kreisen, sodass lediglich ein dritter Punkt der Umfangsfläche optisch ermittelt werden muss, um damit den gesuchten Durchmesser eindeutig festzulegen.

Von Vorteil ist es des Weiteren, wenn die Anlageelemente als Anlagebolzen, insbesondere zylindrische Anlagebolzen, ausgebildet sind. Dadurch sind bei Anlage der Vorrichtung an einen kreisförmigen Gegenstand Anlagelinien gegeben, was zu einer exakten Messgeometrie und daher auch zu besonders guten Messergebnissen führt.

Die Anlagefläche und gegebenenfalls auch die Anlageelemente sind vorzugsweise aus Aluminium oder einer Aluminiumlegierung gebildet, damit die Vorrichtung leicht und robust ist und durch Berührung mit anderen metallischen Gegenständen im Rahmen aufeinanderfolgender Messungen keiner oder allenfalls nur einer geringen Abnutzung unterliegt. Möglich ist es aber auch, dass die Vorrichtung aus einem Kunststoff besteht, beispielsweise einem faserverstärkten Kunststoff. Unabhängig vom Werkstoff kann die Anlagefläche Ausnehmungen aufweisen, sodass die Vorrichtung insgesamt besonders leichtgewichtig bleibt, was einer guten Hantierbarkeit zugutekommt.

Ebenfalls einer guten Hantierbarkeit wegen kann die Vorrichtung einen Haltegriff aufweisen, der an der Anlagefläche an einer den Anlageelementen gegenüberliegenden Seite der Anlagefläche angeordnet ist.

Zweckmäßig ist es, dass an der Anlagefläche an einer Seite, von welcher die Anlageelemente abstehen, zumindest ein, bevorzugt mehrere, insbesondere ein- und ausschaltbare Magnete angeordnet sind und/oder die Anlageelemente magnetisch sind und/oder die Anlageelemente ein- und ausschaltbare Magnete enthalten. Grund hierfür ist, dass insbesondere bei großen Eisenbahnrädern ein Spalt zwischen den Anlageelementen und einem zu vermessenden Eisenbahnrad von 1/10 mm zu einem Messfehler von 1 mm führen kann. Eine Abweichung von 1 mm mag zwar wenig erscheinen, kann aber bei auf einer gemeinsamen Achse gegenüberliegenden Eisenbahnrädern für einen Schadensfall ursächlich sein.

Im Zusammenhang mit einer exakten Anlage der Anlageelemente kann auch ein Signalmittel vorgesehen sein, das bei exakter Anlage der Anlageelemente ein optisches und/oder ein akustisches Signal ausgibt. Das Signalmittel kann z. B. eine Leuchtdiode oder ein Lautsprecher sein. Zur Überprüfung der exakten Anlage kann insbesondere im Hinblick auf zu vermessende kreisförmige Gegenstände aus Metall oder einer Legierung ein Stromkreis vorgesehen sein, in den die Anlageelemente eingebunden sind, sodass bei Anlage der Anlageelemente an einen metallischen Gegenstand der Stromkreis geschlossen wird bzw. ist und das Signalmittel das optische und/oder das akustische Signal ausgibt.

Das zumindest eine weitere als Referenz dienende Element, das am kreisförmigen Gegenstand nicht zur Anlage bringbar ist, kann als Bolzen, insbesondere zylindrischer Bolzen ausgebildet sein, kann aber im Querschnitt auch beispielsweise quadratisch oder rechteckig ausgeführt sein. Einer einfachen Geometrie und hohen Messgenauigkeit wegen ist der Bolzen bevorzugt zylindrisch ausgebildet, wobei in diesem Fall mit Vorteil zumindest zwei weitere Bolzen vorgesehen sind. Dies erweist sich als zweckmäßig bzw. notwendig, wenn ein dritter Punkt einer Umfangsfläche eines kreisförmigen Gegenstandes mittels eines Lichtschnittverfahrens ermittelt werden soll. Durch die zumindest zwei zylindrischen Bolzen als Referenz kann eine Transformation von Punkten, die von der Umfangsfläche aufgenommen worden sind, in Weltkoordinaten durchgeführt werden. Eine Komponente in Richtung der Zylinderachse der als Referenz dienenden Bolzen bleibt zwar unbestimmt, dies ist allerdings für die Zwecke der Bestimmung der Koordinaten zumindest eines weiteren Punktes der Umfangsfläche eines kreisförmigen Gegenstandes nicht von Bedeutung.

Die Anlagefläche ist insbesondere im Hinblick auf eine Anwendung im Bereich von Eisenbahn-, U-Bahn- und Straßenbahnrädern mit Vorteil im Wesentlichen eben ausgebildet, was ein einfaches seitliches Anlegen der Vorrichtung erleichtert.

Ebenfalls im Hinblick auf den erwähnten Einsatzzweck der Vorrichtung bei einer Ermittlung eines Durchmessers eines Eisenbahn-, U-Bahn- oder Straßenbahnrades ist es bevorzugt, dass das zumindest eine weitere als Referenz dienende Element an einer an die Anlagefläche anschließenden Zusatzfläche angeordnet ist. Das zumindest eine weitere als Referenz dienende Element liegt dann in Draufsicht seitlich der zwei Anlageelemente, sodass ein aufzunehmender dritter Punkt der Umfangsfläche des kreisförmigen Gegenstandes bzw. korrespondierende Messdaten ebenfalls außerhalb liegen. Die zumindest drei Punkte sind dann in Richtung der Umfangsfläche des kreisförmigen Gegenstandes betrachtet relativ weit voneinander entfernt, was zu besonders exakten Messergebnissen führt.

Diesbezüglich kann insbesondere vorgesehen sein, dass die Zusatzfläche von der Anlagefläche schräg absteht oder seitlich versetzt zu dieser angeordnet ist. Dadurch ist sichergestellt, dass ein Spurkranz eines Eisenbahn-, U-Bahn- oder Straßenbahnrades mühelos optisch vermessen werden kann.

Von bevorzugt zwei abstehenden Anlageelementen kann zumindest ein Anlageelement in verschiedenen Positionen fixierbar sein, um die Vorrichtung insbesondere an verschiedene Raddurchmesser anpassen zu können.

Das weitere Ziel der Erfindung wird durch eine Einrichtung der eingangs genannten Art erreicht, welche eine erfindungsgemäße Vorrichtung sowie eine optische Messeinrichtung zur gleichzeitigen Erfassung des zumindest einen weiteren als Referenz dienenden Elementes, das mit der Anlagefläche oder einer damit verbundenen Fläche in Verbindung steht, sowie zumindest eines Teils der Umfangsfläche des kreisförmigen Gegenstandes aufweist, wobei die Messeinrichtung mit der Vorrichtung in Verbindung stehen kann.

Ein Vorteil einer erfindungsgemäßen Einrichtung ist darin zu sehen, dass die eingesetzte mechanische Vorrichtung sehr robust ist und mit einer in der Regel davon getrennten optischen Messeinrichtung zusammenwirkt, mit welcher ein für die Ermittlung eines Durchmessers eines kreisförmigen Gegenstandes erforderlicher dritter Punkt der Umfangsfläche ermittelt wird, wobei die optische Messeinrichtung auch für andere Zwecke eingesetzt werden kann. Gleichwohl sind auch Ausführungsvarianten denkbar, in welchen die optische Messeinrichtung mit der Vorrichtung in Verbindung steht und beispielsweise an dieser seitlich angeordnet ist. Zum Beispiel kann die Messeinrichtung mit einem insbesondere verstellbaren Bügel an der Vorrichtung positioniert sein.

Bevorzugt ist vorgesehen, dass die optische Messeinrichtung eine Lichtquelle, insbesondere einen mehrere Strahlenflächen erzeugenden Laser, und einen zur Lichtquelle in einer fixierten Raumorientierung angeordneten Detektor umfasst. Dadurch kann auf einfache Weise das zumindest eine weitere als Referenz dienende Element zusammen mit einem oder mehreren Punkten der Umfangsfläche eines kreisförmigen Gegenstandes im Lichtschnittverfahren aufgenommen werden. Die Detektor- bzw. Sensordaten können anschließend durch die bereits erwähnte Transformation zusammen mit den von der Umfangsfläche aufgenommenen Punkten von Sensordaten in Weltkoordinaten umgerechnet werden, sodass eine Ermittlung eines Durchmessers eines Eisenbahnrades oder eines anderen kreisförmigen Gegenstandes auf einfache Weise möglich ist.

Das weitere Ziel der Erfindung wird erreicht, wenn bei einem Verfahren der eingangs genannten Art zwei abstehende Anlageelemente der Vorrichtung sowie zumindest ein weiteres als Referenz dienendes Element derselben seitlich zugeführt und die Anlageelemente an der Umfangsfläche des Gegenstandes zur Anlage gebracht werden, das zumindest eine weitere als Referenz dienende Element aber von der Umfangsfläche des Gegenstandes beabstandet bleibt, wonach Koordinaten des zumindest einen weiteren Punktes ermittelt werden, indem das zumindest eine weitere als Referenz dienende Element und zumindest ein Teil der Umfangsfläche gleichzeitig optisch vermessen werden und aus den so gewonnenen Messergebnissen die Koordinaten des zumindest einen weiteren Punktes ermittelt werden.

Ein mit einem erfindungsgemäßen Verfahren erzielter Vorteil liegt insbesondere darin, dass die Anlageelemente seitlich zugeführt werden und das Verfahren daher auch beispielsweise bei auf einer Schiene aufliegenden Eisenbahnrädern oder anderen auf einer Unterlage aufliegenden kreisförmigen Gegenständen einsetzbar ist und zu höherer Genauigkeit einer Durchmesserbestimmung führt, da über einen Auflagepunkt hinweg gemessen werden kann, somit die Anlageelemente einen relativ großen Abstand voneinander aufweisen können.

Bevorzugt ist vorgesehen, dass die Vermessung des zumindest einen weiteren als Referenz dienenden Elementes und eines Teils der Umfangsfläche mittels eines Lichtschnittverfahrens erfolgt, wobei mehrere, insbesondere drei, Strahlenflächen abgestrahlt und aufgenommen werden. Dies erlaubt eine eindeutige Transformation der von einem Detektor bzw. Sensor aufgenommenen Punkte der Umfangsfläche von Detektor- bzw. Sensordaten in Weltkoordinaten. Diesbezüglich kann in Bezug auf eine Vermessung von Spurkränzen von Eisenbahnrädern oder dergleichen Rädern vorgesehen sein, dass die Strahlenflächen schräg über das zumindest eine weitere als Referenz dienende Element und einen Teil der Umfangsfläche geführt werden und dabei eine Aufnahme von Messdaten erfolgt, insbesondere wenn zwei als Referenz dienende Elemente in Form von zylindrischen Bolzen vorliegen. Einerseits erlaubt eine axiale Ausdehnung der Messdaten eine Detektion eines Spurkranzmaximums, egal wo sich dieses genau befindet. Andererseits erlaubt eine tangentiale Ausdehnung der Messdaten und die gleichzeitige Erfassung der Bolzen eine genaue Winkelzuordnung jedes einzelnen Messpunktes der Umfangsfläche. Im Gegensatz dazu würde ein bloßer Axialschnitt zwar die Detektion des Spurkranzmaximums sicherstellen, aber keine Winkelzuordnung. Mit einem Schnitt normal zur Radachse können die Bolzen detektiert und damit eine Winkelzuordnung hergestellt werden, allerdings ist nicht sichergestellt, dass das Spurkranzmaximum erfasst wird. Ein Vorteil eines schleifenden Schnittes bzw. einer schrägen Führung der Strahlenflächen über beispielsweise eine Spurkranzkuppe ist darüber hinaus, dass eine große Anzahl von Messdaten sehr nahe am gesuchten Maximum liegt und dadurch eine Genauigkeit durch Glättung und Mittelung der Messdaten gesteigert werden kann.

Bevorzugt ist einer hohen Messgenauigkeit wegen unabhängig von einer Geometrie des oder der als Referenz dienenden Elemente vorgesehen, dass mehrere Messungen durchgeführt und die Messergebnisse gemittelt werden.

Eine Anwendung eines erfindungsgemäßen Verfahrens kommt insbesondere bei Eisenbahn-, U-Bahn- oder Straßenbahnrädern infrage, wobei zuerst der Durchmesser eines Spurkranzes ermittelt wird, wonach ein Profil des Spurkranzes und einer Radlauffläche durch optische Messung ausgenommen wird, worauf anhand des Durchmessers des Spurkranzes und des Profils ein Durchmesser des Eisenbahn-, U-Bahn- oder Straßenbahnrades im Bereich der Radlauffläche berechnet wird.

Wenn ein erfindungsgemäßes Verfahren zur Vermessung von Eisenbahn-, U-Bahn- oder Straßenbahnrädern angewendet wird, wird bevorzugt zuerst der Durchmesser eines Spurkranzes ermittelt, indem für eine Vielzahl von weiteren Punkten Koordinaten ermittelt werden und mithilfe dieser Koordinaten eine Vielzahl von möglichen Durchmessern berechnet wird, wobei der größte berechnete Durchmesser dem Durchmesser des Spurkranzes entspricht.

Bei der Durchführung eines erfindungsgemäßen Verfahrens wird bevorzugt eine erfindungsgemäße Vorrichtung bzw. Einrichtung eingesetzt.

Weitere Merkmale, Vorteile und Wirkungen der Erfindung ergeben sich aus den nachfolgend dargestellten Ausführungsbeispielen. In den Zeichnungen zeigen:
Fig. 1 eine Teildarstellung eines Eisenbahnrades sowie einer erfindungsgemäßen Einrichtung;
Fig. 2 eine grafische Darstellung von Messdaten.

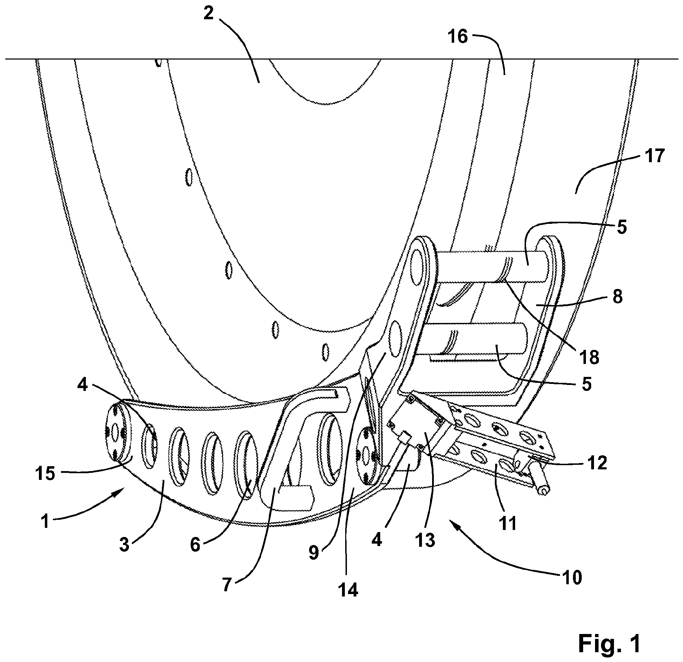

In Fig. 1 ist eine erfindungsgemäße Vorrichtung 1 dargestellt, die für die Zwecke einer Messung an einem kreisförmigen Gegenstand 2, nämlich einem teilweise dargestellten Eisenbahnrad, angeordnet ist. Die Vorrichtung 1 weist eine aus Aluminium oder einer Aluminiumlegierung gefertigte Anlagefläche 3 auf, die im Wesentlichen beidseitig eben ausgebildet ist. Die Anlagefläche 3 weist eine Vielzahl von vorzugsweise kreisrunden Ausnehmungen 6 auf. Die Ausnehmungen 6 dienen vornehmlich dazu, ein Gewicht der Anlagefläche 3 möglichst gering zu halten. Darüber hinaus erlauben die Ausnehmungen 6 es aber auch, zumindest teilweise das dahinterliegende Eisenbahnrad zu sehen. Insbesondere im letzteren Zusammenhang können die Ausnehmungen 6 zwecks besserer Sicht auch eine andere Form aufweisen. Möglich ist es beispielsweise, dass die einzelnen Ausnehmungen 6 zu einem einzigen großen Durchbruch verbunden sind, sodass besonders gute Sichtverhältnisse resultieren.

Die Vorrichtung 1 weist zwei Anlageelemente 4 in Form von Anlagebolzen auf, die vorzugsweise im Querschnitt kreisrund bzw. zylindrisch ausgebildet sind. Die Anlagebolzen, die ebenfalls aus Aluminium oder einer Aluminiumlegierung bestehen können, sind im Bereich von Enden 14, 15 der Anlagefläche 3 starr bzw. unbeweglich angeordnet. Im dargestellten Ausführungsbeispiel sind die zylindrischen Anlagebolzen im Bereich der Enden 14, 15 außenseitig mit einem verbreiterten Bereich ausgeformt und durch zum zylindrischen Bereich der Anlagebolzen korrespondierende Öffnungen der Anlagefläche 3 geführt und an dieser durch Verschrauben der verbreiterten Bereiche befestigt. Möglich ist es aber auch, dass die Anlagebolzen auf andere Weise an der Anlagefläche 3 angeordnet sind. Zum Beispiel kann zumindest einer der Anlagebolzen so an der Anlagefläche 3 gelagert sein, dass dieser in verschiedenen Stellungen durch einen Arretiermechanismus fixiert werden kann. Dies erlaubt es, einen Abstand zwischen den Anlagebolzen je nach Größe eines zu vermessenden Gegenstandes optimal anzupassen. Analoges trifft zu, wenn die Anlageelemente 4 eine andere Form oder einen anderen Querschnitt aufweisen, beispielsweise eine Stiftform.

Im Bereich der Anlagefläche 3 ist des Weiteren ein Haltegriff 7 vorgesehen, mit welchem die Vorrichtung 1 mit einer Hand bewegt werden kann. Darüber hinaus sind an der Anlagefläche 3 nicht dargestellte ein- und ausschaltbare Magnete angeordnet, mit welchen die Vorrichtung 1 bei Einschalten der Magnete an einem metallischen Gegenstand wie einem Eisenbahnrad befestigt werden kann. Auch die Anlagebolzen können mit Magneten ausgestattet sein. Besonders zweckmäßig ist es diesbezüglich, dass die magnetischen Teile bei Bedarf z. B. durch einen an der Anlagefläche 3 außenseitig angeordneten Schalter aktivierbar sind.

Die Vorrichtung 1 weist darüber hinaus eine am Ende 14 anschließende Zusatzfläche 8 auf. Bevorzugt sind die Anlagefläche 3 und die Zusatzfläche 8 integral ausgebildet, wenngleich dies nicht zwingend ist. Die Zusatzfläche 8 ist zur Anlagefläche 3 durch ein angewinkeltes Mittelstück seitlich versetzt und verläuft im Wesentlichen parallel zur Anlagefläche 3, kann aber auch schräg zur Anlagefläche 3 vom Mittelstück abstehen. An der Zusatzfläche 8 sind zwei weitere ortsfeste bzw. starr angeordnete und als Referenz dienende Elemente 5 in Form von Bolzen vorgesehen, die ebenfalls jeweils zylindrisch ausgebildet sind. Diese Bolzen dienen als Referenz und können daher auch als Referenzbolzen bezeichnet werden. Grundsätzlich ist es auch möglich, dass lediglich ein Referenzbolzen eingesetzt wird, dessen Form bei einer Messung bzw. einer Transformation von Messdaten eine eindeutige Zuordnung ermöglicht. Möglich ist es beispielsweise, einen im Querschnitt rechteckigen, gegebenenfalls auch quadratischen, Referenzbolzen vorzusehen. Wie in Fig. 1 ersichtlich, kann an das Mittelstück eine gegenüberliegende parallele Zusatzfläche 9 anschließen, die ebenfalls die Referenzbolzen hält. Dies ist zwar nicht unbedingt erforderlich, erweist sich aber im Hinblick auf einen wiederholten Einsatz der Vorrichtung 1 und eine stabile Position der weiteren Bolzen als zweckmäßig. Möglich ist es auch, auf die vordere Zusatzfläche 9 zu verzichten, insbesondere wenn das Eisenbahnrad bei der später erläuterten Messung seitlich möglichst gut sichtbar sein soll.

Die Vorrichtung 1 ist ein Teil einer Einrichtung 10, die zudem eine Messeinrichtung 11 umfasst. Die Messeinrichtung 11 weist eine Lichtquelle 12 sowie einen Detektor 13 bzw. Sensor auf. Die Lichtquelle 12 ist in der Regel als Laser ausgebildet, wobei vom Laser emittiertes Licht in einem Strahlengang mittels eines Strahlteilers in mehrere parallele Strahlenflächen aufgeteilt wird. Bevorzugt ist vorgesehen, wie in Fig. 1 ersichtlich, dass eine Aufteilung eines Laserstrahls in drei Strahlenflächen erfolgt, die an den Referenzbolzen bzw. einem Spurkranz 16 des Eisenbahnrades jeweils als drei nebeneinanderliegende Laserlinien 18 erscheinen. Diese Laserlinien 18 werden vom Detektor 13 bzw. Sensor während einer Messung aufgenommen.

Eine Messung eines Durchmessers eines kreisförmigen Gegenstandes erfolgt am Beispiel eines Eisenbahn-, U-Bahn- oder Straßenbahnrades wie folgt: In einem ersten Schritt wird die Vorrichtung 1 mit Hand durch Halten am Haltegriff 7 seitlich zum Rad geführt und anschließend leicht nach oben gedrückt, sodass die Anlagefläche 3 außenseitig und die Anlagebolzen am Spurkranz 16 anliegen. Da die Vorrichtung 1 in der Regel wie erwähnt mit schaltbaren Magneten ausgebildet ist bzw. auch die Anlagebolzen ein- und ausschaltbare Magnete umfassen, hält die Vorrichtung 1 nach Einschalten der Magnete selbsttätig am Rad und kann nach Anlegen ausgelassen werden. Das Rad kann dabei eingebaut sein und auf einem Gegenstand wie einer Schiene aufliegen, ohne dass eine Messung dadurch beeinträchtigt wäre. Gleichwohl ist es selbstverständlich auch möglich, dass eine Messung im ausgebauten Zustand des Rades erfolgen kann. In einem zweiten Schritt werden mit der Messeinrichtung 11 bzw. einem Laser drei parallele, voneinander beabstandete Strahlenflächen auf die weiteren als Referenz dienenden Bolzen bzw. Referenzbolzen sowie den Spurkranz 16 projiziert und von einem in einer fixierten Raumorientierung zur Lichtquelle 12 stehenden Detektor 13 bzw. Sensor aufgenommen. Dabei wird die Messeinrichtung 11 insbesondere handbetätigt über die Referenzbolzen und den Spurkranz 16 bewegt. Diese Bewegung erfolgt vorzugsweise so, dass die Laserlinien 18 die Referenzbolzen bzw. den Spurkranz 16 schräg schneiden. Die Laserlinien 18 werden vom Detektor 13 bzw. Sensor erfasst, sodass jeweils Punktwolken für einen Teil der Umfangsfläche sowie die Referenzbolzen resultieren bzw. aufgenommen werden.

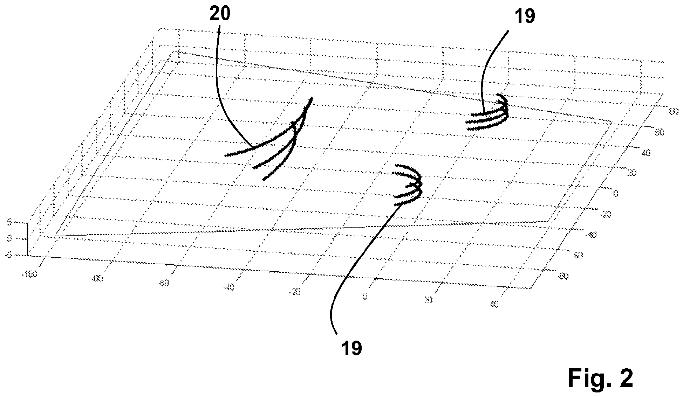

Bei der Messung wird eine Vielzahl von Messdaten erhalten, die mittels eines Computer weiterverarbeitet werden. Der Detektor 13 bzw. Sensor liefert zunächst Messdaten in Form von x,y,z-Koordinaten für jeden Laserpunkt im Sensorkoordinatensystem. Auf dem Computer installierte Software trennt anschließend automatisch die Messdaten der als Referenz dienenden Bolzen bzw. Referenzbolzen, also Referenzdaten 19, von Spurkranzdaten 20, also den für die Durchmesserbestimmung erforderlichen Messdaten, anhand von Formeigenschaften. Hierfür wird der bekannte Durchmesser der als Referenz dienenden Bolzen sowie die relative Lage im Messfeld des Detektors 13 bzw. Sensors verwendet. Eine Darstellung so erhaltener Referenzdaten 19 und Spurkranzdaten 20 ist in Fig. 2 ersichtlich, wobei die rechts ersichtlichen Daten die Referenzdaten 19 darstellen und die links ersichtlichen Daten die Spurkranzdaten 20 bilden. Aus den Referenzdaten 19 wird die Transformation von Detektor- bzw. Sensorkoordinaten in Weltkoordinaten berechnet. Eine derartige Transformation zählt zum Stand der Technik.

Anschließend wird für jeden Messdatenpunkt des Spurkranzes 16 ein möglicher Raddurchmesser berechnet, d. h., es wird ein Kreis berechnet, welcher die beiden Auflagebolzen berührt und durch den jeweiligen Messdatenpunkt geht. Der größte gefundene Durchmesser entspricht dann dem Durchmesser des Spurkranzes 16. Insbesondere bei der Vermessung von Eisenbahn-, U-Bahn- oder Straßenbahnrädern ist eine Ermittlung des Durchmessers des Spurkranzes 16 alleine noch nicht ausreichend. In diesen Fällen kommt es insbesondere auch auf einen Laufkreisdurchmesser einer Radlauffläche 17 an. Diesbezüglich wird die Vorrichtung 1 abgenommen und mittels der Messeinrichtung 11 in bekannter Weise ein Profil entlang der Radachse vermessen. Eine derartige Messung zählt an sich zum Stand der Technik und ist beispielsweise in der EP 1 901 033 A1 offenbart. Steht das Profil entlang der Radachse fest, also axial entlang des Spurkranzes 16 und der Radlauffläche 17, so kann mithilfe des zuvor ermittelten Durchmessers des Spurkranzes 16 auf einfache Weise auch ein Durchmesser eines Rades im Bereich einer Radlauffläche 17 ermittelt werden.

Das erfindungsgemäße Verfahren kann noch weitere Maßnahmen beinhalten. Beispielsweise ist es möglich, dass auf ein gültiges Maximum des ermittelten Durchmessers des Spurkranzes 16 geprüft wird, indem überprüft wird, ob das ermittelte Maximum etwa in der Mitte der erfassten Messdaten liegt. Diesbezüglich kann auch vorgesehen sein, dass eine an die Einrichtung 10 angeschlossene Datenverarbeitungsanlage bzw. ein Computer ein akustisches Signal ausgibt, sodass ein Bediener der Einrichtung 10 eine Messung abschließen kann, wenn die entsprechende Prüfung positiv ist und dementsprechend ein akustisches Signal ausgegeben wird. Darüber hinaus ist es auch möglich, dass anhand der Radprofilmessung und dem aus der Transformation der Detektor- bzw. Sensorkoordinaten in Weltkoordinaten bekannten Kippwinkel der Lichtquelle zu erwartende Kurvenformen der Messdaten 20 theoretisch berechnet und mit den ermittelten Messdaten 20 verglichen werden, was einen Sicherheitsmechanismus darstellt. Ferner ist es auch möglich, eine Genauigkeit und Robustheit des Messergebnisses durch Mehrfachmessung und robuste Mittelung zu erhöhen.

## Patentansprüche

1. Einrichtung (10) zur Ermittlung eines Durchmessers eines kreisförmigen Gegenstandes (2), insbesondere eines Eisenbahn-, U-Bahn- oder Straßenbahnrades im eingebauten Zustand, mit einer Vorrichtung (1), bei der eine Anlagefläche (3) zur seitlichen Anlage an den kreisförmigen Gegenstand (2) vorgesehen ist, wobei an der Anlagefläche (3) zumindest zwei abstehende Anlageelemente (4) zur Anlage der Vorrichtung (1) auch an einer Umfangsfläche des kreisförmigen Gegenstandes (2) angeordnet sind und wobei zumindest ein weiteres als Referenz dienendes Element (5) von der Anlagefläche (3) oder einer damit verbundenen Fläche in starrer Verbindung absteht, **dadurch gekennzeichnet, dass** die Einrichtung (10) eine optische Messeinrichtung (11) mit einer Lichtquelle (12) zur gleichzeitigen Erfassung des zumindest einen weiteren als Referenz dienenden Elementes (5) sowie zumindest eines Teils der Umfangsfläche des kreisförmigen Gegenstandes (2) aufweist, um anhand von Koordinaten von zumindest drei Punkten den Durchmesser des Gegenstandes (2) zu berechnen, wobei die Messeinrichtung (11) mit der Vorrichtung (1) in Verbindung stehen kann.

2. Einrichtung (10) nach Anspruch 1, **dadurch gekennzeichnet, dass** die Anlageelemente (4) der Vorrichtung (1) senkrecht zur Anlagefläche (3) abstehen.

3. Einrichtung (10) nach Anspruch 1 oder 2, **dadurch gekennzeichnet, dass** das zumindest eine weitere als Referenz dienende Element (5) als Bolzen, insbesondere zylindrischer Bolzen, ausgebildet ist.

4. Einrichtung (10) nach Anspruch 3, **dadurch gekennzeichnet, dass** zumindest zwei Bolzen vorgesehen sind.

5. Einrichtung (10) nach einem der Ansprüche 1 bis 4, **dadurch gekennzeichnet, dass** zumindest ein Anlageelement (4) der Vorrichtung (1) in verschiedenen Positionen fixierbar ist.

6. Einrichtung (10) nach einem der Ansprüche 1 bis 5, **dadurch gekennzeichnet, dass** ein Signalmittel vorgesehen ist, das bei exakter Anlage der Anlageelemente (4) ein optisches und/oder ein akustisches Signal ausgibt, wobei vorzugsweise ein Stromkreis vorgesehen ist, in den die Anlageelemente (4) eingebunden sind, sodass bei Anlage der Anlageelemente (4) an einen metallischen Gegenstand der Stromkreis geschlossen ist und das Signalmittel das optische und/oder das akustische Signal ausgibt.

7. Einrichtung (10) nach einem der Ansprüche 1 bis 6, **dadurch gekennzeichnet, dass** die optische Messeinrichtung (11) eine Lichtquelle (12), insbesondere einen mehrere Strahlenflächen erzeugenden Laser, und einen zur Lichtquelle (12) in einer fixierten Raumorientierung angeordneten Detektor (13) umfasst.

8. Einrichtung (10) nach einem der Ansprüche 1 bis 7, **dadurch gekennzeichnet, dass** eine Zusatzfläche (8) vorgesehen ist, die an die Anlagefläche (3) anschließt.

9. Einrichtung (10) nach Anspruch 8, **dadurch gekennzeichnet, dass** das zumindest eine als Referenz dienende Element (5) von der Zusatzfläche (8) absteht.

10. Verfahren zur Ermittlung eines Durchmessers eines kreisförmigen Gegenstandes (2), insbesondere eines Eisenbahn-, U-Bahn- oder Straßenbahnrades im eingebauten Zustand, wobei zumindest zwei Punkte oder Bereiche einer Vorrichtung (1), die einen bekannten Abstand voneinander aufweisen, an einer Umfangsfläche des Gegenstandes (2) angelegt werden, wonach Koordinaten zumindest eines weiteren Punktes der Umfangsfläche des Gegenstandes (2) optisch ermittelt werden, um anhand von Koordinaten von zumindest drei Punkten den Durchmesser des Gegenstandes (2) zu berechnen, **dadurch gekennzeichnet, dass** zwei abstehende Anlageelemente (4) der Vorrichtung (1), welche an einer Anlagefläche der Vorrichtung (1), wobei die Anlagefläche zur seitlichen Anlage an den kreisförmigen Gegenstand vorgesehen ist, angeordnet sind, sowie zumindest ein weiteres als Referenz dienendes Element (5) derselben seitlich zugeführt und die Anlageelemente (4) an der Umfangsfläche des Gegenstandes (2) zur Anlage gebracht werden, das zumindest ein weiteres als Referenz dienendes Element (5) aber von der Umfangsfläche des Gegenstandes (2) beabstandet bleibt, wonach Koordinaten des zumindest einen weiteren Punktes ermittelt werden, indem das zumindest eine weitere als Referenz dienende Element (5) und zumindest ein Teil der Umfangsfläche gleichzeitig optisch vermessen werden und aus den so gewonnenen Messergebnissen die Koordinaten des zumindest einen weiteren Punktes ermittelt werden.

11. Verfahren nach Anspruch 10, **dadurch gekennzeichnet, dass** die Vermessung des zumindest einen weiteren als Referenz dienenden Elementes (5) und eines Teils der Umfangsfläche mittels eines Lichtschnittverfahrens erfolgt, wobei mehrere, insbesondere drei, Strahlenflächen abgestrahlt und aufgenommen werden.

12. Verfahren nach Anspruch 11, **dadurch gekennzeichnet, dass** die Strahlenflächen schräg über das zumindest eine weitere als Referenz dienende Element (5) und einen Teil der Umfangsfläche geführt werden und dabei eine Aufnahme von Messdaten erfolgt.

13. Verfahren nach einem der Ansprüche 10 bis 12, **dadurch gekennzeichnet, dass** ein Eisenbahn-, U-Bahn- oder Straßenbahnrad vermessen wird, wobei zuerst der Durchmesser eines Spurkranzes (16) ermittelt wird, wonach ein Profil des Spurkranzes und einer Radlauffläche (17) durch optische Messung ausgenommen wird, worauf anhand des Durchmessers des Spurkranzes (16) und des Profils ein Durchmesser des Eisenbahn-, U-Bahn- oder Straßenbahnrades im Bereich der Radlauffläche (17) berechnet wird.

14. Verfahren nach einem der Ansprüche 10 bis 13, **dadurch gekennzeichnet, dass** ein Eisenbahn-, U-Bahn- oder Straßenbahnrad vermessen wird, wobei zuerst der Durchmesser eines Spurkranzes (16) ermittelt wird, indem für eine Vielzahl von weiteren Punkten Koordinaten ermittelt werden und mithilfe dieser Koordinaten eine Vielzahl von möglichen Durchmessern berechnet wird, wobei der größte berechnete Durchmesser dem Durchmesser des Spurkranzes (16) entspricht.

15. Verfahren nach einem der Ansprüche 10 bis 14, **dadurch gekennzeichnet, dass** eine Einrichtung (10) nach einem der Ansprüche 1 bis 9 verwendet wird.

## Claims

1. A device (10) for determining the diameter of a circular object (2), in particular of an overground train wheel, underground train wheel, or tram wheel in the installed state, said device comprising an apparatus (1), in which there is a contact surface (3) provided for lateral abutment against the circular object (2), wherein at least two protruding contact elements (4) for abutment of the apparatus (1) also against a circumferential surface of the circular object (2) are arranged on the contact surface (3), and wherein at least one further element (5) used as reference protrudes in a fixedly connected manner from the contact surface (3) or a surface connected thereto, **characterised in that** the device (10) comprises an optical measuring device (11) with a light source (12) for simultaneous detection of the at least one further element (5) used as reference and at least part of the circumferential surface of the circular object (2), so as to calculate the diameter of the object (2) on the basis of coordinates of at least three points, wherein the measuring device (11) can be connected to the apparatus (1).

2. The device (10) according to claim 1, **characterised in that** the contact elements (4) of the apparatus (1) protrude perpendicularly to the contact surface (3).

3. The device (10) according to claim 1 or 2, **characterised in that** the at least one further element (5) used as reference is formed as a pin, in particular a cylindrical pin.

4. The device (10) according to claim 3, **characterised in that** at least two pins are provided.

5. The device (10) according to any one of claims 1 to 4, **characterised in that** at least one contact element (4) of the device (1) can be fixed in various positions.

6. The device (10) according to any one of claims 1 to 5, **characterised in that** a signal means is provided, which outputs an optical and/or an acoustic signal in the event of exact abutment of the contact elements (4), wherein an electric circuit is preferably provided, in which the contact elements (4) are incorporated, such that the electric circuit is closed in the event of abutment of the contact elements (4) against a metal object and the signal means outputs the optical and/or acoustic signal.

7. The device (10) according to any one of claims 1 to 6, **characterised in that** the optical measuring device (11) comprises a light source (12), in particular a laser generating a plurality of ray planes, and a detector (13) arranged in a fixed spatial orientation relative to the light source (12).

8. The device (10) according to any one of claims 1 to 7, **characterised in that** an additional surface (8) is provided which adjoins the contact surface (3).

9. The device (10) according to claim 8, **characterised in that** the at least one element (5) used as reference protrudes from the additional surface (8).

10. A method for determining the diameter of a circular object (2), in particular of an overground train wheel, underground train wheel, or tram wheel in the installed state, wherein at least two points or regions of an apparatus (1) which are at a known distance from one another are placed against a circumferential surface of the object (2), whereupon coordinates of at least one further point of the circumferential surface of the object (2) are optically determined, so as to calculate the diameter of the object (2) on the basis of coordinates of at least three points, **characterised in that** two protruding contact elements (4) of the apparatus (1) which are arranged on a contact surface of the apparatus (1), wherein the contact surface is provided for lateral abutment against the circular object, and at least one further element (5) of said apparatus used as reference are guided laterally and the contact elements (4) are brought into abutment against the circumferential surface of the object (2), however the at least one further element (5) used as reference remains distanced from the circumferential surface of the object (2), whereupon coordinates of the at least one further point are determined **in that** the at least one further element (5) used as reference and at least part of the circumferential surface are optically measured at the same time and the coordinates of the at least one further point are determined from the measurement results thus obtained.

11. The method according to claim 10, **characterised in that** the at least one further element (5) used as reference and part of the circumferential surface are measured by means of a light section process, wherein a plurality of ray planes, in particular three, are irradiated and recorded.

12. The method according to claim 11, **characterised in that** the ray planes are guided at an incline over the at least one further element (5) used as reference and part of the circumferential surface, and measurement data are recorded at the same time.

13. The method according to any one of claims 10 to 12, **characterised in that** an overground train wheel, underground train wheel or tram wheel is measured, wherein firstly the diameter of a wheel flange (16) is determined, whereupon a profile of the wheel flange and a wheel running surface (17) is exempted by optical measurement, whereupon the diameter of the overground train wheel, underground train wheel or tram wheel in the region of the wheel running surface (17) is calculated on the basis of the diameter of the wheel flange (16) and the profile.

14. The method according to any one of claims 10 to 13, **characterised in that** an overground train wheel, underground train wheel or tram wheel is measured, wherein firstly the diameter of a wheel flange (16) is determined **in that** coordinates are determined for a plurality of further points, and with the aid of these coordinates a plurality of possible diameters are calculated, wherein the largest calculated diameter corresponds to the diameter of the wheel flange (16).

15. The method according to any one of claims 10 to 14, **characterised in that** a device (10) according to any one of claims 1 to 9 is used.

## Revendications

1. Système (10), destiné à déterminer un diamètre d'un objet de forme circulaire (2), notamment d'une roue de train, de métro ou de tramway en position montée, doté d'un dispositif (1), sur lequel est prévue une surface d'appui (3) destinée à l'appui latéral de l'objet de forme circulaire (2), sur la surface d'appui (3) étant placés au moins deux éléments d'appui (4) débordants, pour l'appui du dispositif (1) également sur une surface circonférentielle de l'objet de forme circulaire (2) et au moins un élément (5) supplémentaire, faisant office de référence débordant en liaison rigide de la surface d'appui (3) ou d'une surface reliée avec celle-ci, **caractérisé en ce que** le système (10) comporte un système de mesure optique (11) pourvu d'une source lumineuse (12) pour la détection simultanée d'au moins un élément (5) supplémentaire faisant office de référence, ainsi que d'au moins une partie de la surface circonférentielle du diamètre de forme circulaire de l'objet (2), pour calculer à l'aide de coordonnées d'au moins trois points le diamètre de l'objet (2), le système de mesure (11) pouvant être en liaison avec le dispositif (1).

2. Système (10) selon la revendication 1, **caractérisé en ce que** les éléments d'appui (4) du dispositif (1) débordent à la perpendiculaire de la surface d'appui (3).

3. Système (10) selon la revendication 1 ou 2, **caractérisé en ce que** l'au moins un élément (5) supplémentaire faisant office de référence est conçu sous la forme d'un boulon, notamment d'un boulon cylindrique.

4. Système (10) selon la revendication 3, **caractérisé en ce qu'**au moins deux boulons sont prévus.

5. Système (10) selon l'une quelconque des revendications 1 à 4, **caractérisé en ce qu'**au moins un élément d'appui (4) du dispositif (1) est susceptible d'être fixé dans différentes positions.

6. Système (10) selon l'une quelconque des revendications 1 à 5, **caractérisé en ce qu'**il est prévu un moyen signalétique, qui lors d'un appui précis des éléments d'appui (4) délivre un signal optique et/ou acoustique, de préférence un circuit électrique étant prévu, dans lequel sont intégrés les éléments d'appui (4) de sorte que lors de l'appui des éléments d'appui (4) sur un objet métallique, le circuit électrique soit fermé et le moyen signalétique délivre le signal optique et/ou acoustique.

7. Système (10) selon l'une quelconque des revendications 1 à 6, **caractérisé en ce que** le système de mesure optique (11) comprend une source lumineuse (12), notamment un laser générant plusieurs surfaces de faisceau et un détecteur (13) placé selon une orientation spatiale fixée par rapport à la source lumineuse (12).

8. Système (10) selon l'une quelconque des revendications 1 à 7, **caractérisé en ce qu'**il est prévu une surface additionnelle (8) qui se raccorde sur la surface d'appui (3).

9. Système (10) selon la revendication 8, **caractérisé en ce que** l'au moins un élément (5) faisant office de référence déborde de la surface additionnelle (8).

10. Procédé, destiné à déterminer un diamètre d'un objet de forme circulaire (2), notamment d'une roue de train, de métro ou de tramway en position montée, lors duquel on appuie au moins deux points ou zones d'un dispositif (1) qui présentent l'un par rapport à l'autre un écart connu sur une surface circonférentielle de l'objet (2), suite à quoi on détermine par voie optique des coordonnées d'au moins un point supplémentaire de la surface circonférentielle de l'objet (2), pour calculer à l'aide de coordonnées d'au moins trois points le diamètre de l'objet (2), **caractérisé en ce que** deux éléments d'appui (4) débordants du dispositif (1), lesquels sont placés sur une surface d'appui du dispositif (1), la surface d'appui étant prévue pour l'appui latéral sur l'objet de forme circulaire, ainsi qu'au moins élément (5) supplémentaire faisant office de référence sont amenés latéralement vers cette dernière, les éléments d'appui (4) étant amenés en appui sur la surface circonférentielle de l'objet (2), mais l'au moins un élément (5) supplémentaire faisant office de référence restant écarté de la surface circonférentielle de l'objet (2), suite à quoi, on détermine des coordonnées de l'au moins un point supplémentaire, en mesurant simultanément par voie optique l'au moins un élément (5) supplémentaire faisant office de référence et au moins une partie de la surface circonférentielle et à partir des résultats de mesure ainsi obtenus, on détermine les coordonnées de l'au moins un point supplémentaire.

11. Procédé selon la revendication 10, caractérisé en ce la mesure de l'au moins un élément (5) supplémentaire faisant office de référence et d'une partie de la surface circonférentielle s'effectue au moyen d'un procédé de coupe optique, plusieurs, notamment trois surfaces de faisceau étant émises et captées.

12. Procédé selon la revendication 11, **caractérisé en ce que** les surfaces de faisceau sont guidées en oblique par-dessus l'au moins un élément (5) supplémentaire faisant office de référence et une partie de la surface circonférentielle et à cet effet, il s'effectue un enregistrement de données de mesure.

13. Procédé selon l'une quelconque des revendications 10 à 12, **caractérisé en ce qu'**on mesure une roue de train, de métro ou de tramway, d'abord le diamètre d'un boudin de roue (16) étant déterminé, suite à quoi, le profil du boudin de roue et d'une surface de roulement de roue (17) est enregistrée par mesure optique, puis à l'aide du diamètre du boudin de roue (16) et du profil, un diamètre de la roue de train, de métro ou de tramway dans la surface de roulement de roue (17) est calculé.

14. Procédé selon l'une quelconque des revendications 10 à 13, **caractérisé en ce qu'**on mesure une roue de train, de métro ou de tramway, d'abord le diamètre d'un boudin de roue (16) étant déterminé **en ce que** pour une pluralité de points supplémentaires, des coordonnées sont déterminées et à l'aide desdites coordonnées, une pluralité de diamètres possibles est calculée, le plus grand diamètre calculé correspondant au diamètre du boudin de roue (16).

15. Procédé selon l'une quelconque des revendications 10 à 14, **caractérisé en ce qu'**on utilise un système (10) selon l'une quelconque des revendications 1 à 9.
